# FASCICULE DE BREVET EUROPEEN

(11) **EP 1 468 346 B1**
(45) Date de publication et mention de la délivrance du brevet: **16.08.2006**
(21) Numéro de dépôt: 03712266.0
(22) Date de dépôt: 20.01.2003
(51) Int. Cl.: G05G 9/047, B25J 17/02

(54) **ORGANE DE COMMANDE A TROIS BRANCHES PARALLELES**
BEDIENELEMENT MIT DREI PARALLELEN ARMEN
CONTROL UNIT WITH THREE PARALLEL BRANCHES

(30) Priorité: 22.01.2002 FR 0200755
(43) Date de publication de la demande: 20.10.2004
(73) Titulaire: COMMISSARIAT A L'ENERGIE ATOMIQUE, 75752 Paris Cédex 15 (FR)
(72) Inventeur: GOSSELIN, Florian, 92260 Fontenay aux Roses (FR); VILLEDIEU, Eric, 13770 Venelles (FR); FRICONNEAU, Jean-Pierre, 78330 Fontenay le Fleury (FR)
(74) Mandataire: Poulin, Gérard
(86) Numéro de dépôt international: PCT/FR2003/000170
(87) Numéro de publication internationale: WO 2003/062939

(56) Documents cités:
- EP-A- 0 540 197
- WO-A-95/04959
- PATENT ABSTRACTS OF JAPAN vol. 2000, no. 09, 13 octobre 2000 (2000-10-13) & JP 2000 181618 A (MITSUBISHI PRECISION CO LTD), 30 juin 2000 (2000-06-30)

## Description

L'invention concerne un organe de commande à trois branches parallèles.

Les organes de commande sont destinés à des procédés variés comme la télémanipulation, la téléchirurgie, les jeux, ou la commande d'autres engins en enregistrant et communiquant des mouvements que l'opérateur leur fait subir. Leurs structures comportent un nombre variable de degrés de liberté qui permettent de commander un nombre égal de fonctions de l'engin.

On connaît différents genres de structures d'organes de commande, mais la plus répandue comprend des enchaînements de tronçons mutuellement articulés entre une embase généralement fixe et une poignée tenue par l'opérateur. Ces enchaînements portent le nom de branches. On rencontre souvent une branche unique, et l'organe de commande est alors un bras articulé ou "bras série", nécessitant, pour obtenir un grand nombre de degrés de liberté, soit un nombre important de moteurs embarqués au niveau des différentes articulations, soit des transmissions complexes si les moteurs sont placés à proximité de la base. Dans tous les cas, le montage est nécessairement complexe. On connaît aussi des organes à deux ou trois branches montées en parallèle entre l'embase et la poignée qui permettent d'obtenir un grand nombre de degrés de liberté tout en conservant des branches simples. Les branches convergent alors vers une plate-forme porteuse de la poignée et sont reliées à elle par des articulations doubles (joints universels ou de cardan) ou triple (rotules).

Plusieurs écueils doivent être évités par le concepteur d'un organe de commande de ce genre : il est indiqué d'éviter les configurations qu'on ne peut pas atteindre ou qu'on atteint par un mouvement indéterminé, incapable d'engendrer une commande correcte ; les configurations du premier genre correspondent souvent à des collisions entre les tronçons des branches, et celles du second genre à des singularités cinématiques provenant par exemple de couplages entre les mouvements des articulations. Il est encore préférable de limiter la complexité mécanique de la structure. Enfin, il est avantageux que les moteurs dits de retour d'effort, qui sont nécessaires pour retenir les articulations à l'état où elles ont été portées par l'opérateur et pour opposer une résistance aux déplacements qui rend la commande plus agréable, soient montés sur l'embase plutôt que sur les branches mobiles, puisque leur volume rend les collisions plus probables et que leur poids doit être soutenu par des branches de section suffisante pour lui résister et donc plus lourdes. De plus, les mouvements des branches peuvent faire varier les efforts de flexion qu'exercent les moteurs par leur porte-à-faux et donc les conditions d'équilibre de l'organe.

Il est manifeste que ces conditions ne peuvent être pas être remplies simultanément et qu'il n'existe pas de structure idéale pour un organe de commande comportant par exemple six degrés de liberté et trois branches parallèles. C'est ainsi qu'il existe un organe de ce genre dont les six moteurs associés aux six degrés de liberté sont tous montés sur l'embase, mais les trois branches sont reliées à l'embase par des articulations doubles, qui imposent, outre une plus grande complexité de réalisation et de réglage que les articulations simples, des couplages des mouvements qui nuisent à l'efficacité de la transmission des efforts. Une source bibliographique est l'article "Kinematic analysis of a novel 6-DOF parallel manipulator" par Cleary et Brooks, IEEE, 1050-4729, 1993, pp.708 à 713.

Dans plusieurs autres organes de commande, certains tronçons sont dédoublés en parallélogramme ou en pantographe. Au lieu de devoir disposer des moteurs aux deux articulations des extrémités de ces tronçons, les moteurs peuvent être placés sur deux sommets inférieurs du parallélogramme ou du pantographe afin d'exercer un porte-à-faux moins important, mais ces moteurs sont alors tous mobiles et le dédoublement du tronçon n'est pas excellent. Un exemple est l'organe développé par Iwata et appelé "Haptic Master",décrit dans Internet au site de Tsukuba (http://intron.kz.tsukuba.ac.jp/HM/txt.html) ; et d'autres sont donnés dans l'article "A 6-DOF force-reflécting hand controller using the fivebar parallel mechanism", par Woo, Jin et Kwon, Proceedings of the IEEE, International Conférence on Robotics & Automation, Louvain, Belgique, mai 1998, pp. 1597-1601.

L'état de la technique le plus proche est le document WO 95/04959.

L'organe de commande conforme à l'invention est caractérisé par une grande simplicité de structure jointe à un petit nombre de moteurs mobiles. De plus, les moteurs mobiles ne sont pas placés de façon défavorable, c'est-à-dire qu'ils ne sont pas susceptible de produire un porte-à-faux variable et important ni d'entrer facilement en collision avec d'autres parties de l'organe.

Pour résumer, l'organe de commande conforme à l'invention, et qui comprend trois branches parallèles reliant une embase à une plate-forme porteuse d'une poignée (ou tout autre moyen de préhension), est caractérisé en ce que les branches se composent de trois tronçons, dont un premier tronçon joint à l'embase par une première articulation qui est une articulation de pivotement du premier tronçon autour de lui-même, un deuxième tronçon joint au premier tronçon par une deuxième articulation qui est une articulation de rotation pour modifier un angle que font le premier tronçon et le deuxième tronçon, un troisième tronçon joint à la plate-forme par une rotule et au deuxième tronçon par une troisième articulation qui est une articulation de rotation pour modifier un angle que font le deuxième tronçon et le troisième tronçon, et en ce que les branches comprennent seulement deux moteurs de retour d'effort, dont un premier moteur fixé sur l'embase et mesurant des pivotements du premier tronçon et un second moteur placé sur la deuxième articulation et mesurant les rotations entre le premier tronçon et le deuxième tronçon.

Le détail des avantages obtenus sera décrit par la suite. On peut cependant déjà ajouter que les singularités cinématiques seront fortement réduites en implantant les premiers tronçons sur l'embase dans des directions divergentes et, de préférence, à une inclinaison de 40° environ sur la verticale (ou, plus généralement, sur une normale au plan passant par les trois points d'implantation des premiers tronçons). La valeur de 40° n'est qu'approximative, il n'existe pas de limite nette d'inclinaison qu'on préconise d'adopter, et il a été simplement constaté que les singularités étaient sensiblement moins probables vers cette valeur.

L'invention sera maintenant décrite en référence aux figures, dont la figure 1 est une vue générale de l'invention et les figures 2 et 3 illustrent un mode de réalisation favori ainsi que le détail des moteurs de retour d'effort et des articulations des tronçons.

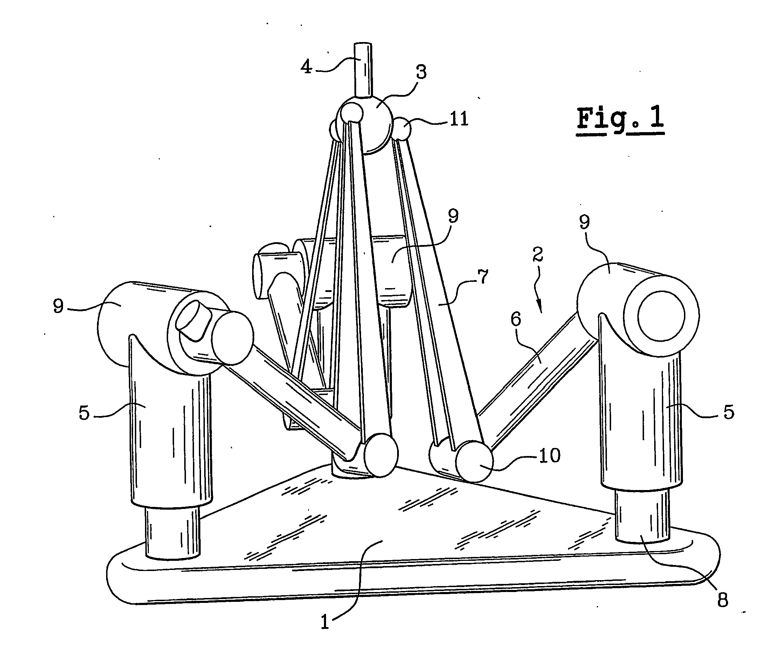

On se reporte à la figure 1. Une embase porte la référence 1 et l'organe comprend principalement trois branches semblables, toutes référencées par 2 et composées de trois tronçons articulés entre l'embase 1 et une plate-forme 3, à laquelle est fixée une poignée 4 saisie par l'opérateur; la plate-forme 3 peut être plate comme il est courant, ou, comme ici, en forme de boule. Chacune des branches 2 comprend un premier tronçon 5 articulé à l'embase 1, un troisième tronçon 7 articulé à la plate-forme 3, et un deuxième tronçon 6 articulé aux deux précédents. Les branches 2 comprennent encore une première articulation 8 entre l'embase 1 et le premier tronçon 5, une deuxième articulation 9 entre les premier et deuxième tronçons 5 et 6, une troisième articulation 10 entre les deuxième et troisième 6 et 7, et une articulation de rotule 11 entre le troisième tronçon 7 et la plate-forme 3. La première articulation 8 est une articulation de pivotement, c'est-à-dire que son axe est colinéaire au premier tronçon 5, qui peut donc tourner autour de lui-même sur l'embase 1 ; les deuxième et troisième articulations 9 et 10 sont des articulations de rotation, qui permettent de changer les angles que font les tronçons menant à elles, à savoir le deuxième tronçon 6 et, respectivement, le premier tronçon 5 et le troisième tronçon 7. Dans cette réalisation, les axes de ces articulations de rotations sont donc perpendiculaires aux tronçons qu'elles relient, et de plus, ils sont parallèles entre eux. Dans d'autres réalisations, cela ne serait pas nécessairement le cas. On s'aperçoit que la plate-forme 3 peut être déplacée suivant les trois degrés de liberté usuels de translation dans l'espace et de rotation autour de trois axes distincts, par des mouvements se répercutant dans les branches 2 sans que celles-ci s'y opposent. Les six degrés de liberté de l'organe de commande sont donc obtenus.

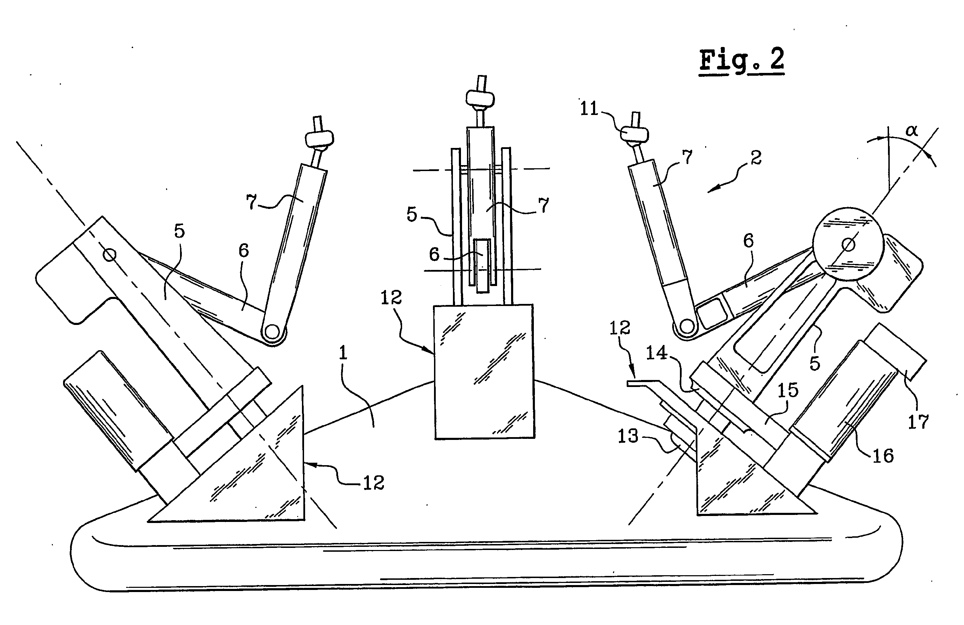

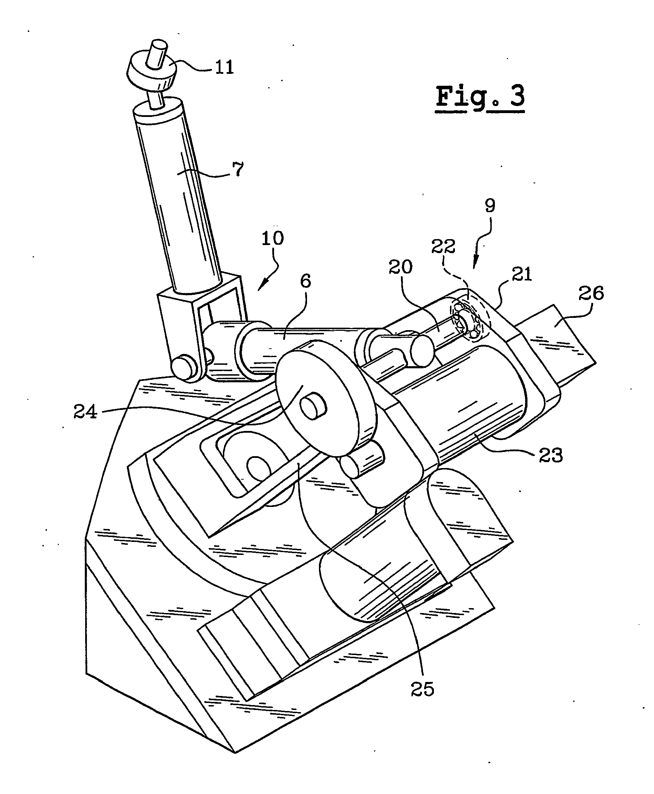

On se reporte maintenant aux figures 2 et 3, où par souci de clarté la plate-forme et la poignée n'ont pas été représentées, qui représentent une réalisation légèrement différente où les premiers tronçons 5 ne sont pas parallèles entre eux et verticaux par rapport à une embase 1 plane et horizontale, mais sont inclinés dans des directions divergentes en faisant un angle α d'environ 40° par rapport à la normale de l'embase 1. Cette disposition permet d'écarter les troisièmes tronçons 7, qui étaient rapprochés dans la réalisation précédente, et donc de réduire les risques de collisions entre ces troisièmes tronçons 7, et aussi de déplacer les singularités cinématiques en dehors de l'espace de travail utile. L'embase 1 comprend alors des socles 12 inclinés sur lesquels les premiers tronçons 5 sont montés par l'intermédiaire d'un roulement 13 qui matérialise la première articulation 8. Le pied des premiers tronçons 5 porte une poulie 14 autour de laquelle une courroie 15 est tendue ; l'autre extrémité de la courroie 15 est tendue autour de l'arbre d'un moteur 16 également fixé au socle 12 et qui comprend un codeur 17 mesurant les mouvements de rotation de l'arbre. Un dispositif de ce genre constitue un moyen de retour d'effort par lequel le moteur 16 maintient le tronçon 5 au repos à l'état qu'il a atteint grâce à sa résistance à l'arrêt ; mais quand un mouvement est imposé au premier tronçon 5, le codeur 17 l'enregistre et permet de commander l'engin non représenté qui dépend de l'organe de commande. Ce moteur 16 est fixe puisque lié à l'embase 1, ce qui est avantageux pour les raisons mentionnées. On notera que pour actionner la partie 14, tout autre moyen équivalent peut être utilisé (engrenage, câble, etc.).

Les articulations de rotation 9 et 10 sont matérialisées chacune par un axe 20 soutenu par une chape 21 fixée à l'un des tronçons que l'articulation relie, et l'autre des tronçons est fixé à l'axe 20. L'axe 20, fixé au deuxième tronçon 6 dans la deuxième articulation 9, est articulé à la chape 21 fixée au premier tronçon 5 par les roulements 22. La chape 21 porte un moteur 23, et l'axe 20 porte une poulie 24. Une courroie 25, ou tout autre moyen de transmission, est tendue entre la poulie 24 et l'arbre du moteur 23, et un codeur 26 mesure les mouvements de l'arbre du moteur 23. Il s'agit d'un dispositif de retour d'effort semblable au précédent. Les mouvements de rotation du deuxième tronçon 6 par rapport au premier tronçon 5 sont enregistrés par le codeur 26, et le moteur 23 soutient le deuxième tronçon 6 à la position qu'il a atteinte.

La troisième articulation 10 est analogue par sa structure à la deuxième articulation 9, mais elle est plus petite puisqu'elle ne comporte pas de moteur de retour d'effort : elle est libre et passive, tout comme la rotule 11. Ainsi, le moteur 23 de retour d'effort n'est pas fixé à l'embase, mais il ne fait qu'accompagner les mouvements de pivotement du premier tronçon 5 et se déplace donc peu, ce qui réduit les déséquilibres et les risques de collision qu'il est susceptible de produire presque autant que s'il avait été fixé à l'embase. On remarquera que les tronçons 5, 6 et 7 sont simples, c'est-à-dire qu'ils ne comprennent pas de parallélogramme ni de pantographe.

## Revendications

1. Organe de commande à trois branches parallèles (2) reliant une embase (1) à une plate-forme (3) porteuse d'un moyen de préhension tel qu'une poignée (4), **caractérisé en ce que** les branches se composent de trois tronçons (5, 6, 7), dont un premier tronçon (5) joint à l'embase par une première articulation (8) qui est une articulation de pivotement du premier tronçon autour de lui-même, un deuxième tronçon (6) joint au premier tronçon (5) par une deuxième articulation (9) qui est une articulation de rotation pour modifier un angle entre le premier tronçon et le deuxième tronçon, un troisième tronçon (7) joint à la plate-forme (3) par une rotule (11) et au deuxième tronçon (6) par une troisième articulation. (10) qui est une articulation de rotation pour modifier un angle entre le deuxième tronçon et le troisième tronçon, et **en ce que** les branches comprennent seulement deux moteurs (16, 23) de retour d'effort, dont un premier moteur (16) fixé sur l'embase (1, 12) et mesurant des pivotements du premier tronçon (5) et un second moteur (23) placé sur la deuxième articulation (9) et mesurant des rotations entre le premier tronçon et le deuxième tronçon.

2. Organe de commande suivant la revendication 1, **caractérisé en ce que** les premiers tronçons (5) sont implantés sur l'embase (1, 12) dans des directions divergentes.

3. Organe de commande suivant la revendication 2, **caractérisé en ce que** les premiers tronçons (5) sont implantés sur l'embase (1, 12) suivant une inclinaison de 40° environ par rapport à une normale de l'embase.

## Claims

1. Controller with three parallel arms (2) connecting a base (1) to a platform (3) carrying grasping means such as a handle (4), **characterized in that** the arms are made up of three links (5,6,7) of which a first link (5) joined to the base by a first joint (8) which is a pivot joint of the first link about itself, a second link (6) joined to the first link (5) by a second joint (9) which is a rotation joint to modify an angle between the first link and the second link, a third link (7) joined to the platform (3) by a ball-joint (11) and to the second link (6) by a third joint (10) which is a rotation joint to modify an angle between the second link and the third link, and **in that** the arms only comprise two force feedback motors (16,23), of which a first motor (16) fixed to the base (1,12) and measuring pivot movements of the first link (5) and a second motor (23) positioned on the second joint (9) and measuring the rotations between the first link and the second link.

2. Controller as in claim 1, **characterized in that** the first links (5) are implanted on the base (1,12) in diverging directions.

3. Controller as in claim 2, **characterized in that** the first links (5) are implanted on the base (1,12) at an incline of around 40° relative to a normal of the base.

## Patentansprüche

1. Bedienelement mit drei parallelen Armen (2), die einen Sockel (1) mit einem eine Handhabungseinrichtung wie etwa einen Griff (4) umfassenden Zentralgelenk (3) verbinden,
**dadurch gekennzeichnet, dass** die Arme durch drei Teilstücke (5, 6, 7) gebildet werden, nämlich ein erstes Teilstück (5), das mit dem Sockel durch ein erstes Gelenk (8) verbunden ist, das ein Schwenkgelenk des ersten Teilstücks um sich selbst ist, ein zweites Teilstück (6), das mit dem ersten Teilstück (5) durch ein zweites Gelenk (9) verbunden ist, das ein Drehgelenk zur Veränderung eines Winkels zwischen dem ersten Teilstück und dem zweiten Teilstück ist, und ein drittes Teilstück (7), das mit dem Zentralgelenk (3) durch ein Kugelgelenk (11) und mit dem zweiten Teilstück (6) durch ein drittes Gelenk (10) verbunden ist und ein Drehgelenk zur Veränderung eines Winkels zwischen dem zweiten Teilstück und dem dritten Teilstück ist, und **dadurch**, dass die Arme nur zwei Kraftrückführungsmotoren (16, 23) umfassen, von denen ein erster Motor (16) an dem Sockel (1, 12) befestigt ist und Schwenkungen des ersten Teilstücks (5) misst, und ein zweiter Motor (23) sich an dem zweiten Gelenk (9) befindet und Drehungen zwischen dem ersten Teilstück und dem zweiten Teilstück misst.

2. Bedienelement nach Anspruch 1, **dadurch gekennzeichnet, dass** die ersten Teilstücke (5) in divergierenden Richtungen auf den Sockel (1, 12) montiert sind.

3. Bedienelement nach Anspruch 2, **dadurch gekennzeichnet, dass** die ersten Teilstücke (5) in Bezug auf eine Normale zum Sockel (1, 12) eine Neigung von ungefähr 40° aufweisen.
